# EUROPÄISCHE PATENTSCHRIFT

(11) **EP 2 005 016 B1**
(45) Veröffentlichungstag und Bekanntmachung des Hinweises auf die Patenterteilung: **11.07.2012**
(21) Anmeldenummer: 07724041.4
(22) Anmeldetag: 05.04.2007
(51) Int. Cl.: F16C 32/06

(54) **EINBAUSTÜCK ZUR AUFNAHME EINES WALZENZAPFENS**
INSTALLATION PART FOR RECEIVING A ROLL JOURNAL
PIECE D'INSERTION POUR RECEVOIR UN TOURILLON

(30) Priorität: 08.04.2006 DE 102006016714
(43) Veröffentlichungstag der Anmeldung: 24.12.2008
(73) Patentinhaber: SMS Siemag AG, 40237 Düsseldorf (DE)
(72) Erfinder: KELLER, Karl, 57271 Hilchenbach (DE); KNIE, Daniel, 57258 Freudenberg (DE)
(74) Vertreter: Klüppel, Walter
(86) Internationale Anmeldenummer: PCT/EP2007/003100
(87) Internationale Veröffentlichungsnummer: WO 2007/115791

(56) Entgegenhaltungen:
- WO-A-2004/065031
- JP-A- 57 195 918
- JP-A- 2000 263 108
- US-A- 4 944 609

## Beschreibung

Die Erfindung betrifft ein Einbaustück in einem Walzgerüst zur Aufnahme eines Walzenzapfens mit einer Zapfenbuchse einer in der Stahl- und Nichteisenmetallbearbeitung verwendeten Walze, wobei das Einbaustück eine der Walze zugewandte Ballenseite und einer der Ballenseite gegenüberliegende Ablaufseite aufweist, mit Schmiermittelaufnahmeräumen auf der Ballenseite.

Walzenzapfenlager, insbesondere Morgoil - Walzenzapfenlager, werden im Walzwerksbau seit Jahrzehnten eingesetzt. Hierbei sind alle lasttragenden Lagerteile einschließlich der Befestigungselemente und Dichtungen in einem Lagergehäuse, dem sogenannten Einbaustück, untergebracht.

Auf den Zapfen der Walzen, den Walzenzapfen, befinden sich Zapfenbuchsen. Zusammen mit der Lagerbuchse bilden die Zapfenbuchsen ein Radiallager, wobei die Lagerbuchse im Einbaustück festgelegt ist. Die Lagerbuchse umschließt dabei die Zapfenbuchse.

Zwischen der äußeren Oberfläche der Zapfenbuchse und der inneren Oberfläche der Lagerbuchse befindet sich ein Ölfilm, der den metallischen Kontakt der Lagergleitflächen ausschließt. Das Öl wird kontinuierlich durch das Lager gedrückt. Dieses bedeutet, dass sich das Öl in einem Kreislauf befindet. Der Einlauf des Öls in das Radiallager erfolgt durch Öleinlauftaschen. Diese befinden sich in der Lagerbuchse und werden durch Leitungen, die in den Einbaustücken als Bohrungen ausgeführt sind, mit Öl aus einem Öltank versorgt.

Durch den konstanten Druck der Ölpumpen gelangt das Öl auf die Lagergleitflächen und verteilt sich dort. Überschüssiges Öl tritt an den beiden Seitenkanten aus, wird dort aufgefangen und über Ablaufleitungen zum Öltank zurückgeführt.

Damit beim Walzen kein Öl aus den Lagern auf das Walzgut gelangt, befindet sich auf der Ballenseite eine Abdichtung. Die Abdichtung eines Gleitlagers kann durch ein formgepresstes Gummiprofil erfolgen. Die Abdichtung bewirkt, dass das aus dem Lager austretende Öl in Hohlräume des Einbaustückes gelangt, von wo eine Weiterleitung erfolgt.

Die Druckschrift JP 57 195918 A beschreibt eine verbesserte Schmierung einer Walzenlagerung durch eine effektive Kühlung in dem unbelasteten Bereich der Lagerfläche und eine effektive Schmierung im belasteten Bereich der Lagerfläche.

Aus der EP 0 285 333 B1 ist eine Lagerbuchse bekannt, die durch einen in der Lagermitte befindlichen Ringkanal in zwei Lagerstellen aufgeteilt ist. Über diesen Ringkanal werden ca. 50 % des aus dem Lager abfließenden Öls abgeleitet. Das ballenseitige Dichtungssystem wird nur noch mit der Hälfte der üblichen Ölmenge belastet. Die Möglichkeit, dass Öl unkontrolliert austritt, wird verringert.

Hierbei ist es notwendig, beide Bereiche der Lagerbuchse mit einem eigenen Einlass, durch welchen Öl der Innenlagerfläche zugeführt wird, auszustatten. Weiterhin sind in dem Ringkanal Auslassöffnungen zur Abführung des Öls eingebracht.

Diese zusätzlichen Maßnahmen bewirken einen erhöhten Herstellungsaufwand.

Aus der WO 2004 / 065 031 A1 ist ein Einbaustück zur Aufnahme des Walzenzapfens einer in der Stahl- und Nichteisenmetallbearbeitung verwendeten Walze bekannt, mit mindestens einem Schmiermittelaufnahmeraum auf der Ballenseite und mit mindestens einem Schmiermittelaufnahmeraum auf der Abflussseite, welche unterhalb des tiefsten Lagerpunktes angeordnet sind, sowie Verbindungsbohrungen zwischen den Schmiermittelaufnahmeräumen auf der Ballen- und der Ablaufseite, wobei auf der Ballenseite des Einbaustückes das Schmiermittel in zusätzlichen Schmiermittelaufnahmeräumen in dem Einbaustück aufgefangen wird. Die zusätzlichen Schmiermittelaufnahmeräume sind dabei oberhalb oder in Höhe der Mittenebene angeordnet. Dieses bewirkt, dass dem oben, oberhalb der Mittenebene, austretende Öl der lange Weg zum tiefsten Lagerpunkt, mit Störung durch weiteres, austretendes Öl, erspart bleibt. Bei einem Einbaustück muss das Schmiermittel, das Öl an den Punkt gebracht werden, wo der größte Druck und die größte Reibung zwischen dem Walzenzapfen und dem Einbaustück stattfindet. Bei einem oberen Einbaustück ist dieses Stelle immer oben, d.h. oberhalb der Mittelebene, weil die Walzkraft nach oben gerichtet ist und demzufolge hier durch die Kraft auch das Schmiermittel, das Öl aus dem Lager herausgepresst wird und einen langen Weg zum tiefsten Lagerpunkt zurücklegen müsste. Auf diesem Weg ist die Gefahr eines Ölaustritts aus der Dichtung gegeben.

Beim Betrieb eines Walzwerkes kann die Funktion der ballenseitigen Abdichtung gestört werden. Beispielsweise läuft die Dichtungslippe der ballenseitigen Abdichtung durch einen Anstieg des Öls in der Auffangkammer in einem Ölsumpf. Eine weitere Störung beruht beispielsweise auf den Verschleiß der Dichtlippen einer Abdichtung. Die Eigenschaften der Dichtungslippe verändern sich in der Weise, dass Öl austreten kann. Dieses führt zu einer Ölleckage und zu großen Ölmengenverlusten. Bei Kaltstraßen erfolgt durch den Ölaustritt z.B. eine Bandbeschmutzung, welche die Qualität des Produktes beeinträchtigt.

Die Weiterleitung des auf der Ballenseite in Auffangkammern gesammelten Öls erfolgt bei bekannten Einbaustücken durch zwei Bohrungen, welche die Ballenseite mit der Ablaufseite verbinden. Die Bohrungen befinden sich unterhalb des tiefsten Lagerpunktes. Das Öl fließt durch die Bohrungen zu einem Ölauffangraum auf der Außenseite des Einbaustückes. Von hier aus wird das Öl über ein oder zwei Bohrungsanschlüsse üblicherweise durch bewegliche Schläuche in die Rücklaufleitung zum Öltank geführt. Die bekannten Bohrungen sind dabei rechts und links im Einbaustück vorgesehen (vgl. Fig. 2 der WO 2004 / 065 031 die Schmiermittelaufnahmeräume 20 und 21 mit den dazu gehörenden Bohrungen 10 oder Fig. 4A, 4B der EP 0 285 333 die Bohrungen 40). Bei beiden Ausführungen ist der horizontale Abstand der Ölrücklaufbohrungen größer als der Durchmesser des Walzenzapfens.

Die bekannte Anordnung und Gestaltung der Schmiermittelrücklaufbohrungen an dieser Position führt dazu, dass die Einbaustücke im unteren Bereich nicht verändert werden können, ohne die Schmiermittelrücklaufbohrungen zu verlagern.

Der Erfindung liegt daher die Aufgabe zugrunde, ein Einbaustück der eingangs beschriebenen Art so auszubilden, dass der Schmiermitteldurchtritt im Bereich der Gehäusezungen weiter minimiert wird, so dass das überschüssige Schmiermittel aus dem Einbaustück vollständig bzw. fast vollständig in den Schmiermitteltank rückgeleitet wird, und dass die Position bzw. die Lage der Schmiermittelrücklaufbohrungen die Kontur des Einbaustücks im unteren Bereich nicht behindert.

Diese Aufgabe wird durch den Gegenstand des Anspruchs 1 gelöst. Um den Schmiermitteldurchtritt im Bereich der Gehäusezungen noch weiter zu minimieren sieht die erfindungsgemäße Anordnung vor, die auswechselbare Gehäusezunge als Anstreifdichtung auszubilden. Anstelle einer starren Gehäusezunge, die einen geringen Spalt freilässt, wird eine Anstreifdichtung eingebaut, die in Kontakt mit der sich drehenden Zapfenbuchse sein kann. Beispielsweise besteht die Anstreifdichtung aus einem Dichtungsträger, auf den eine Wabendichtung aus Metallfolie aufgelötet ist. Andere Ausbildungen, wie Kunststoffstege, Gummilamellen oder dergleichen können ebenfalls berücksichtigt werden. Dabei weist die Anstreifdichtung eine Verformbarkeit auf, die eine Verschiebung der Walzenachse ermöglicht. Die Anstreifdichtung passt sich der geänderten Einbaulage an.

Um beschädigte oder defekte Gehäusezungen austauschen zu können, sieht eine weitere Ausbildung vor, dass die Gehäusezunge als Einzelteil ausgebildet ist und ausgetauscht werden kann. Hierzu ist vorgesehen, dass die Gehäusezunge ohne Ausbau des kompletten Einbaustückes von außen ausgewechselt wird.

Eine spezielle Ausführung des Einbaustückes sieht vor, dass die Schmiermittelrücklaufbohrung im Bereich, vorzugsweise symmetrisch zu der vertikalen Mittenebene des Einbaustückes ausgebildet ist. D.h. die bisher außerhalb der vertikalen Projektionsebene des Walzenzapfens angeordneten Schmiermittelrücklaufbohrungen werden zur Mitte hin verschoben. Dadurch können die Konturen der Einbaustücke im jeweils unteren Bereich ohne Schwächung so verändert werden, dass sie beispielsweise in einem geänderten Ständerfenster eingebaut werden können.

Es wurde erkannt, dass für die durch die oberhalb der horizontalen Mittenebene angeordneten Schmiermittelauffangräume reduzierten Schmiermittelmengen im unteren Teil der Einbaustücke eine Schmiermittelrücklaufbohrung zum Ableiten des Schmiermittels ausreicht.

Dabei ist in einer ersten Ausführung eine Schmiermittelrücklaufbohrung in der vertikalen Mittenebene vorgesehen, wobei der Durchmesser dieser Schmiermittelrücklaufbohrung kleiner ist als der Durchmesser der Schmiermittelrücklaufbohrungen, die die Schmiermittelräume oberhalb oder in Höhe der Mittenebene von der Ballenseite mit der Ablaufseite verbinden. Der kleinere Durchmesser ergibt sich aus dem geringeren Schmiermittelvolumen, welches aus dem Schmiermittelaufnahmeraum unterhalb des tiefsten Lagerpunktes abgeleitet werden muss.

Als Ausgestaltung wird vorgeschlagen, dass die unteren Schmiermittelrücklaufbohrung durch drei parallele kleinere Bohrungen oder ein Langloch gebildet werden. Hierdurch wird erreicht, dass das Einbaustück im Bereich der Mittenebene eine geringere Höhe aufweisen muss als bei einer Ausführung mit nur einer einzigen Schmiermittelrücklaufbohrung.

Eine weitere Ausgestaltung sieht vor, dass die Schmiermittelrücklaufbohrungen auf der Ablaufseite zusammengeführt werden. Gegenüber den bekannten Ausführungen mit vier Schmiermittelrücklaufbohrungen besteht der Vorteil darin, dass weniger Verbindungsstücke benötigt werden, um die auf der Ablaufseite zusammengeführten Schmiermittelrücklaufbohrungen zu verbinden.

Die Erfindung wird anhand von sehr schematischen Zeichnungen näher beschrieben.

Es zeigen:
- Fig. 1: einen Halbschnitt einer ersten Ausführung eines Einbaustückes,
- Fig. 2: eine Frontalansicht des Einbaustückes aus Fig. 1 entlang der Schnittebene X - X,
- Fig.3: eine weitere Ausführungsform einer unteren Bohrung,
- Fig. 4: in geschnittener Seitenansicht ein Einbaustück in der dort eingezeichneten Schnittposition.

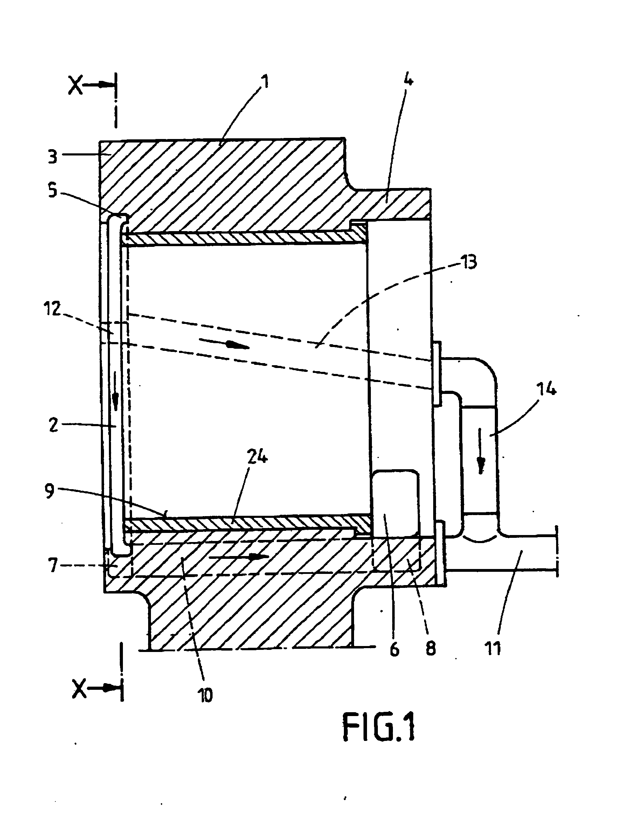

Figur 1 zeigt ein Einbaustück 1, worin ein Walzenzapfen 27 (nicht dargestellt) durch eine Zapfenbuchse 24 und eine Lagerbuchse 28 (nicht dargestellt) gelagert ist. Während die Zapfenbuchse 24 drehfest mit dem Walzenzapfen 27 verbunden ist, wird die Lagerbuchse 28 im Einbaustück 1 festgelegt. Zwischen Lagerbuchse 28 und Zapfenbuchse 24 befindet sich ein kontinuierlicher Schmiermittelfilm. Das Schmiermittel 2 gelangt durch ein Schmiermittelumlaufsystem über Schmiermitteleinlauftaschen in den Spalt zwischen Lagerbuchse 28 und Zapfenbuchse 24. Bei einer symmetrischen Lastverteilung wird das Schmiermittel 2 je zur Hälfte auf der Ballenseite 3 und der Abflaufseite 4 ablaufen. Zur Ableitung des Schmiermittels 2 sind in dem Einbaustück 1 auf der Ballenseite 3 und der Ablaufseite 4 umlaufende Schmiermittelauffangrinnen 5, 6 eingearbeitet. Diese Schmiermittelauffangrinnen 5, 6 werden im unteren Bereich erweitert zu zwei Schmiermittelaufnahmeräumen 7, 8, die sich unterhalb des tiefsten Punktes 9 des Lagerbuchseninnendurchmessers befinden.

Die bekannte, unten im Einbaustück 1 angeordnete Bohrung 10 bewirkt ein Ableiten des Schmiermittels 2 aus dem Schmiermittelaufnahmeraum 7 auf der Ballenseite 3 zur Ablaufseite 4 des Einbaustückes 1. Das Schmiermittel 2 wird auf der Ablaufseite 4 in einem Schmiermittelaufnahmeraum 8 aufgefangen und von dort über einen Schlauch oder zwei bewegliche Schläuche 11 zu einem nicht dargestellten Schmiermitteltank geführt. Dort kann das Schmiermittel 2 gereinigt und/oder gekühlt werden, um anschließend wieder in das Lager gefördert zu werden.

Zur zusätzlichen Ableitung des Schmiermittels 2 befinden sich oberhalb der Mittenebene weitere Schmiermittelaufnahmeräume 12. Diese Schmiermittelaufnahmeräume 12 sind durch Schmiermittelrücklaufbohrungen 13 mit der Ablaufseite 4 verbunden. Das Schmiermittel 2 wird auf der Ablaufseite 4 durch ein Verbindungsstück 14 in den Schlauch oder die Schläuche 11 geleitet.

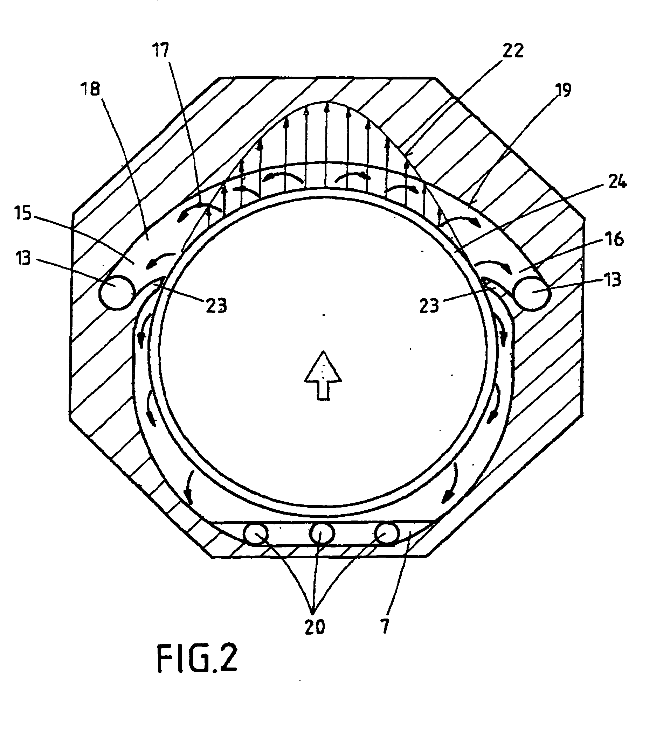

Die Figur 2 zeigt beispielsweise die Lage von zwei Schmiermittelaufnahmeräumen 15 und 16 oberhalb der horizontalen Mittenebene. Je nach Drehrichtung der Walze werden die Schmiermitteltropfen 17 verstärkt an die Außenflächen 18 oder 19 der Schmiermittelauffangrinne 5 geschleudert.

Von dort kann das Schmiermittel 2 in die Schmiermittelaufnahmeräume 15 oder 16 abfließen. Das Schmiermittel 2, welches unterhalb der Schmiermittelaufnahmeräume 15, 16 austritt, wird in die unteren Schmiermittelaufnahmeraum 7 geleitet. Der Schmiermittelaufnahmeraum 7 auf der Ballenseite 3 ist durch drei parallele Bohrungen 20 mit dem unteren Schmiermittelauffangraum 8 auf der Ablaufseite 4 verbunden. Ist das dargestellte Einbaustück 1 als oberes Einbaustück 1 vorgesehen, so wirkt der nicht dargestellte Walzenzapfen mit einer Kraft in die mit einem Pfeil dargestellte Richtung und erzeugt eine Lagerkraftverteilung, wie sie beispielsweise durch die Kurve 22 dargestellt ist. Durch die Schmiermittelauffangräume 15, 16 und die Schmiermittelrücklaufbohrungen 13 gelangt nur ein kleiner Teil des Schmiermittels 2 in den unteren Schmiermittelauffangraum 7. Dieser kann daher beispielsweise durch drei kleine Schmiermittelrücklaufbohrungen 20 mit dem Schmiermittelauffangraum 8 verbunden werden.

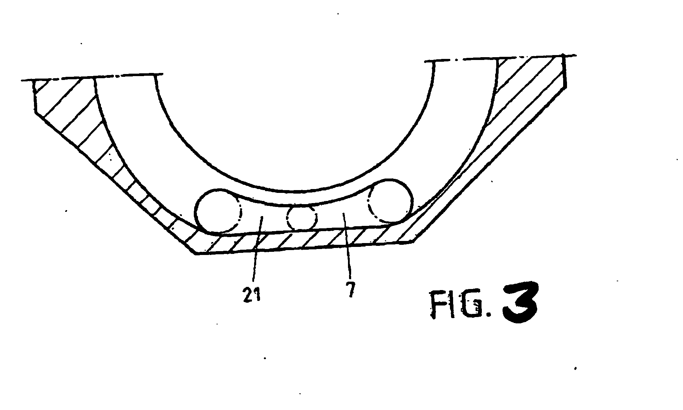

In Figur 3 ist alternativ ein Langloch 21 anstelle der drei kleinen Bohrungen 20 vorgesehen.

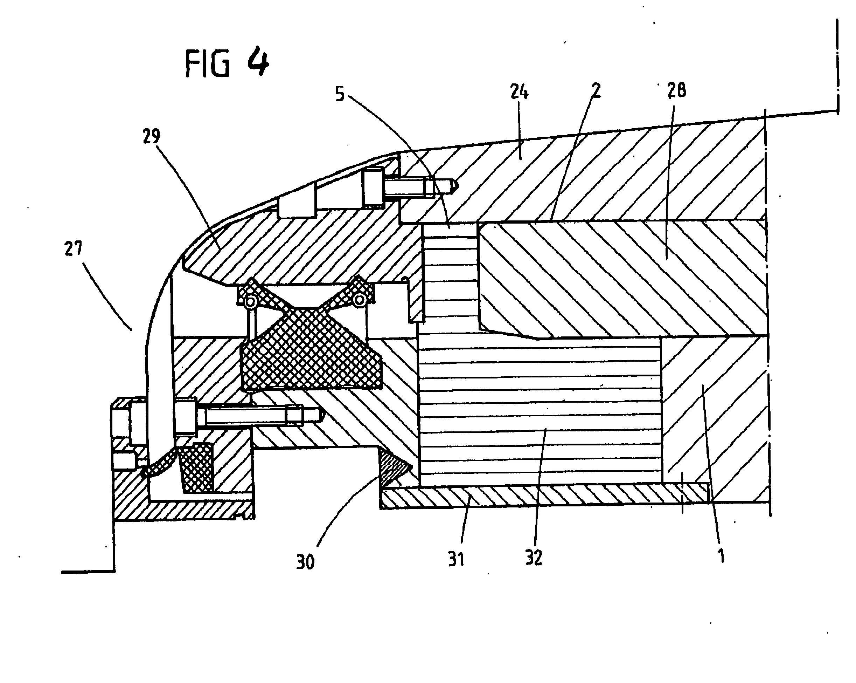

In Figur 4 ist in geschnittener Seitenansicht ein Einbaustück dargestellt. Das feststehende Einbaustück 1 ist mit einer feststehenden Lagerbuchse 28 ausgebildet. Auf dem Walzenzapfen 27 befindet sich eine Zapfenbuchse 24, an der eine Zapfenbuchsenverlängerung 29 festgeschraubt ist. Diese Teile drehen sich.

Zwischen der Zapfenbuchse 24 und der Lagerbuchse 28 befindet sich das Schmiermittel 2, welches in die Schmiermittelauffangrinne 5 gelangt. In die Schmiermittelauffangrinne 5 ragt eine Gehäusezunge 23, so dass ein Spalt von beispielsweise ca. 1 bis 2 mm bleibt. Die Gehäusezunge 23 wird als separates Teil aus- bzw. eingebaut. Dargestellt ist eine spezielle Gehäusezunge 23, die als Dichtung 30 ausgebildet ist und aus einem Dichtungsträger 31 und einer Anstreifdichtung 32, beispielsweise einer Wabendichtung aus Metallfolie, besteht. Beide Teile sind zusammengelötet.

### Bezugszeichenübersicht

- 1: Einbaustück
- 2: Schmiermittel
- 3: Ballenseite
- 4: Ablaufseite
- 5: Schmiermittelauffangrinne
- 6: Schmiermittelauffangrinne
- 7: unterer Schmiermittelaufnahmeraum
- 8: unterer Schmiermittelaufnahmeraum
- 9: tiefster Punkt der Lagerbuchse
- 10: Schmiermittelrücklaufbohrung
- 11: Schlauch
- 12: Schmiermittelaufnahmeraum
- 13: Schmiermittelrücklaufbohrung
- 14: Verbindungsstück
- 15: oberer Schmiermittelaufnahmeraum
- 16: oberer Schmiermittelaufnahmeraum
- 17: Schmiermitteltropfen
- 18: Außenfläche
- 19: Außenfläche
- 20: Bohrung
- 21: Langloch
- 22: Kurve
- 23: Gehäusezunge
- 24: Zapfenbuchse

- 27: Walzenzapfen
- 28: Lagerbuchse
- 29: Zapfenbuchsenverlängerung
- 30: Dichtung
- 31: Dichtungsträger
- 32: Anstreifdichtung

## Patentansprüche

1. Walzgerüst mit einem Einbaustück (1) zur Aufnahme eines Walzenzapfens (27) mit einer Zapfenbuchse (24) einer in der Stahl- und Nichteisenmetallbearbeitung verwendeten Walze, wobei das Einbaustück (1) eine der Walze zugewandte Ballenseite (3) und eine der Ballenseite (3) gegenüberliegende Ablaufseite (4) aufweist,
mit Schmiermittelaufnahmeräumen (7, 15, 16) auf der Ballenseite (3) und
mindestens einer Gehäusezunge (23) auf der Ballenseite (3), zum zumindest teilweisen Abgrenzen der Schmiermittelaufnahmeräume (7, 15, 16) gegeneinander,
**dadurch gekennzeichnet,**
**dass** die Gehäusezunge (23) als Anstreifdichtung (32) ausgebildet ist.

2. Walzgerüst nach Anspruch 1,
**gekennzeichnet durch**:
eine oder mehrere Schmiermittelrücklaufbohrungen, wobei die Schmiermittelrücklaufbohrung (10) im Bereich, vorzugsweise symmetrisch zu, der vertikalen Mittenebene angeordnet ausgebildet ist.

3. Walzgerüst nach Anspruch 1 oder 2,
**gekennzeichnet durch**
eine oder mehrere Schmiermittelrücklaufbohrungen, wobei die Schmiermittelrücklaufbohrung (10) mit einem kleineren
Durchmesser als die Schmiermittelrücklaufbohrung (13) ausgebildet ist.

4. Walzgerüst nach einem der Ansprüche 1 bis 3,
**gekennzeichnet durch**
eine oder mehrere Schmiermittelrücklaufbohrungen, wobei die Schmiermittelrücklaufbohrung (10) aus mehreren Bohrungen (20) bestehend ausgebildet ist.

5. Walzgerüst nach einem der Ansprüche 1 bis 4,
**gekennzeichnet durch**
eine oder mehrere Schmiermittelrücklaufbohrungen, wobei die Schmiermittelrücklaufbohrung (10) aus einem Langloch (21) bestehend ausgebildet ist.

6. Walzgerüst nach einem der Ansprüche 1 bis 5,
**gekennzeichnet durch**
eine oder mehrere Schmiermittelrücklaufbohrungen, wobei die Schmiermittelrücklaufbohrungen (10, 13) auf der Ablaufseite (4) zusammengeführt werden.

## Claims

1. Roll stand with a chock (1) for receiving a roll pin (27) with a pin bush (24) of a roll used in steel and non-ferrous metal processing, wherein the chock (1) has a barrel side (3) facing a roll and a tail side (4) opposite the barrel side (3), with lubricant receiving spaces (7, 15, 16) on the barrel side (3) and at least one housing tongue (23) on the barrel side (3) for at least partial delimiting of the lubricant receiving spaces (7, 15, 16) relative to one another, **characterised in that** the housing tongue (23) is formed as a wiper seal (32).

2. Roll stand according to claim 1, **characterised by** one or more lubricant return bores, wherein the lubricant return bore (10) is constructed to be arranged in the region of, preferably symmetrically with respect to, the vertical centre plane.

3. Roll stand according to claim 1 or 2, **characterised by** one or more lubricant return bores, wherein the lubricant return bore (10) is formed with a smaller diameter than the lubricant return bore (13).

4. Roll stand according to any one of claims 1 to 3, **characterised by** one or more lubricant return bores, wherein the lubricant return bore (10) is constructed to consist of a plurality of bores (20).

5. Roll stand according to any one of claims 1 to 4, **characterised by** one or more lubricant return bores, wherein the lubricant return bore (10) is constructed to consist of a slot (21).

6. Roll stand according to any one of claims 1 to 5, **characterised by** one or more lubricant return bores, wherein the lubricant return bores (10, 13) are led together on the tail side (4).

## Revendications

1. Cage de laminoir comprenant un élément (1) faisant office d'empoise pour la réception d'un tourillon de cylindre (27) comprenant un coussinet de tourillon (24) d'un cylindre utilisé dans le traitement de l'acier et des métaux non-ferreux, l'élément (1) faisant office d'empoise présentant un côté accumulation (3) tourné vers le cylindre et un côté évacuation (4) opposé au côté accumulation (3), des chambres de réception de lubrifiant (7, 15, 16) étant disposées du côté accumulation (3) et comprenant au moins un angle rentrant de la volute (23) du côté accumulation (3) pour délimiter au moins en partie les chambres de réception de lubrifiant (7, 15, 16) l'une par rapport à l'autre, **caractérisée en ce que** l'angle rentrant de la volute (23) est réalisé sous la forme d'un joint d'étanchéité par effleurement (32).

2. Cage de laminoir selon la revendication 1, **caractérisée par** un ou plusieurs alésages de retour de lubrifiant, dans laquelle l'alésage de retour de lubrifiant (10) est réalisé pour venir se disposer dans la zone du plan médian vertical, de préférence en position symétrique par rapport audit plan.

3. Cage de laminoir selon la revendication 1 ou 2, **caractérisée par** un ou plusieurs alésages de retour de lubrifiant, dans laquelle l'alésage de retour de lubrifiant (10) est réalisé avec un diamètre inférieur à celui de l'alésage de retour de lubrifiant (13).

4. Cage de laminoir selon l'une quelconque des revendications 1 à 3, **caractérisée par** un ou plusieurs alésages de retour de lubrifiant, dans laquelle l'alésage de retour de lubrifiant (10) est réalisé pour être constitué par plusieurs alésages (20).

5. Cage de laminoir selon l'une quelconque des revendications 1 à 4, **caractérisée par** un ou plusieurs alésages de retour de lubrifiant, dans laquelle l'alésage de retour de lubrifiant (10) est réalisé pour être constitué d'un trou oblong (21).

6. Cage de laminoir selon l'une quelconque des revendications 1 à 5, **caractérisée par** un ou plusieurs alésages de retour de lubrifiant, dans laquelle les alésages de retour de lubrifiant (10, 13) se réunissent du côté évaluation (4).
